# EUROPÄISCHE PATENTSCHRIFT

(11) **EP 2 450 729 B1**
(45) Veröffentlichungstag und Bekanntmachung des Hinweises auf die Patenterteilung: **10.02.2016**
(21) Anmeldenummer: 11186066.4
(22) Anmeldetag: 21.10.2011
(51) Int. Cl.: G02B 6/44, F16L 3/24, H02G 3/32

(54) **Baukasten für Befestigungsvorrichtung**
Construction kit for fixing device
Système modulaire pour un dispositif de fixation

(30) Priorität: 04.11.2010 DE 102010050465; 25.02.2011 DE 102011012438
(43) Veröffentlichungstag der Anmeldung: 09.05.2012
(73) Patentinhaber: Berthold Sichert GmbH, 12277 Berlin (DE)
(72) Erfinder: Perschon, Helmut, 12305 Berlin (DE)
(74) Vertreter: Weickmann & Weickmann

(56) Entgegenhaltungen:
- EP-A1- 2 211 079
- EP-A2- 1 303 019
- EP-A2- 1 458 073
- DE-A1- 3 242 073
- DE-U- 7 522 695
- DE-U1- 8 712 895
- GB-A- 2 245 019
- GB-A- 2 450 519
- US-A- 4 119 285
- US-A1- 2004 118 798

## Beschreibung

### I. Anwendungsgebiet

Die Erfindung betrifft einen Verteilerschrank für Glasfaserstränge und die darin benötigte Befestigungsvorrichtung für die Glasfaserstränge.

### II. Technischer Hintergrund

Glasfaserstränge werden zur Breitband-Datenübertragung benutzt, also sowohl für Internet- als auch für TV- und Telefonanschlüsse. Der in der Regel im Freien aufgestellte Verteilerschrank enthält die - meist passiven - optischen Verteileranlagen für ein bestimmtes räumliches Gebiet, beispielsweise einen Straßenzug.

Analoge Kabelverteilerschränke stehen für den Anschluss von einzelnen Nutzern über Kupferkabel heute bereits in großer Zahl auf öffentlichem Grund. Nunmehr sollen die Nutzer mit einer Glasfaserleitung versorgt werden.

Im Unterschied zu Kupferkabeln sind Glasfaserkabel jedoch empfindlicher, mechanisch weniger stabil und leichter zu beschädigen. Die Glasfaserstränge sind dabei in Führungsrohren aus Kunststoff geführt, die vorab verlegt und im Verteilerschrank auch befestigt werden müssen, und in die die Glasfaserstränge bei Bedarf dann nachträglich eingeblasen werden.

Aus diesem Grund ist es essentiell, dass der innere freie Querschnitt dieser Führungsrohre an keiner Stelle unzulässig vermindert wird, da sonst das Einblasen der Glasfaserstränge nicht möglich ist. Insbesondere an den Stellen, an denen die Führungsrohre mittels einer Befestigungsvorrichtung im Verteilerschrank fixiert werden, muss hierfür Sorge getragen werden.

Weiterhin ist zu beachten, dass diese Führungsrohre in unterschiedlichen Durchmessern vorliegen, je nach der benötigten Kapazität des Glasfaserstranges.

Häufig ist bei der Auslieferung des Verteilerschrankes noch nicht sicher, welche Art, also Durchmesser, von Führungsrohren dort befestigt werden muss, oder es liegt eine Mischung von Führungsrohren unterschiedlicher Durchmesser vor, deren Anzahl und Zusammensetzung sich häufig erst vor Ort genau bestimmen lässt.

Deshalb muss eine entsprechende Befestigungsvorrichtung hierauf flexibel und mit geringem Aufwand, also auch am Aufstellungsort des Verteilerschrankes, somit im Freien, anpassungsfähig sein.

In diesem Zusammenhang sind bereits Befestigungsvorrichtungen bekannt, die meist aus Blechteilen bestehen, die eine konventionelle, mittels Schrauben zusammenpressbare, Kabelschelle enthalten.

Zum einen hat dies den Nachteil, dass bei zu starkem Zuschrauben der Kabelschelle der Durchmesser des darin gehaltenen Führungsrohres unzulässig verengt wird.

Des Weiteren bedingt dies, dass für Führungsrohre mit unterschiedlichen Durchmessern unterschiedliche Kabelschellen und damit unterschiedliche Blechteile hergestellt und vorgehalten werden müssen, da die Kabelschellen nicht als Einzelteil auswechselbar an der Befestigungsvorrichtung angeordnet sind. Zusätzlich ist die Montage mit einem hohen Arbeitsaufwand durch eine Vielzahl von Schraubvorgängen sehr langwierig und fehlerbehaftet, indem beispielsweise herabfallende Schrauben im Inneren des Verteilerschrankes nur sehr schlecht wieder gefunden werden können, aber wegen der Gefahr von elektrischen Kurzschlüssen nicht einfach liegengelassen werden können.

In diesem Zusammenhang zeigt die EP 1458073 A2 eine Befestigungsvorrichtung, die zwar einem anderen Zweck dient, aber alle grundsätzlichen Merkmale der erfindungsgemäßen Befestigungsvorrichtung und des Baukastens hierfür aufweist, wenn auch hinsichtlich der Ausgestaltung der einzelnen Elemente mit einer anderen Gestaltung.

Auch die G 8712895 zeigt eine Befestigungsvorrichtung für Glasfaserstränge, die fast alle Grundelemente des Baukastens enthält.

Schiebeklemmen, die in einer hinterschnittenen Nut einer Profilschiene eingesetzt werden können, sind in vielfacher Form bekannt, beispielsweise aus der US 4119285, dem GM 7522695, der GB 2245019, der US 2004/0118798A1 und der EP 2211079 A1.

Ferner zeigt die GB 2450519 eine Bodenmuffe zum dichten Einführen eines Glasfaser-Erdkabels durch eine Einführ-Öffnung, nicht jedoch die spezifische Zugentlastungseinheit, wie sie im Rahmen der Erfindung beschrieben ist.

### III. Darstellung der Erfindung

### a) Technische Aufgabe

Es ist daher die Aufgabe gemäß der Erfindung, einen Baukasten und eine daraus herstellbare Befestigungsvorrichtung zur Verfügung zu stellen, die aus wenigen verschiedenen Einzelteilen besteht und mit geringem Zeitaufwand und ohne Beschädigungsgefahr für die Führungsrohre eine schnelle und übersichtliche Fixierung der Führungsrohre ermöglicht sowie ein schnelles Erstellen der Befestigungsvorrichtung auch vor Ort im Verteilerschrank.

### b) Lösung der Aufgabe

Diese Aufgabe wird durch die Merkmale der Ansprüche 1 und 16 gelöst. Vorteilhafte Ausführungsformen ergeben sich aus den Unteransprüchen.

Dabei besteht die fertige Befestigungsvorrichtung aus einer hinter einer Lage von Glasfasern quer verlaufenden Profilschiene, jeweils auf die hintereinander Schiebeklammern aufgeschoben sind, die einen nach vorne vorstehenden Klammerbereich aufweisen, der C-förmig und nach vorne hin offen ist zum Eindrücken eines der Führungsrohre.

Die Profilschiene ist dabei vorzugsweise über ihre gesamte Länge entweder nur mit solchen Schiebeklammern angefüllt, oder um die Schiebeklammern auf Abstand zueinander zu halten durch zusätzliche entsprechende Schiebeabstandshalter, die ebenfalls wie die Schiebeklammern auf die Profilschiene aufgeschoben sind.

Da in einem Verteilerschrank meist mehrere Lagen von nebeneinander geführten Führungsrohren in der Tiefe hintereinander vorhanden sind, und für jede Lage eine Profilschiene benötigt wird, weist eine solche Befestigungsvorrichtung meist mehrere, in der Tiefe, also dem Abstand zur Rückwand des Verteilerschrankes, unterschiedlich positionierte Profilschienen auf, die vorzugsweise auch auf unterschiedlichen Höhen montiert sind.

Ebenso sind voreinander liegende Lagen von Glasfasersträngen in Führungsrohren auf unterschiedlichen Höhen abgeschnitten, um auch das Verspleißen mit dem weiterführenden Glasfaserstrang an jeder einzelnen Lage von Glasfasersträngen unbehindert durch die davor liegenden und darunter endenden Glasfaserstränge durchführen zu können.

Die Profilschienen sind vorzugsweise nur an einer ihrer Stirnseiten mit einem von der Rückwand vorstehenden und mit diesem verschraubten Aufnahmeteil, insbesondere einem gewinkelten Aufnahmeblech, verschraubt, nicht jedoch an der gegenüberliegenden Stirnfläche.

Dennoch können im montierten Zustand diese Profilschienen ihr Lage nicht verändern, da sie an der einen Stirnfläche fixiert sind und durch die lückenlose Anfüllung mit Schiebeklammern und Schiebeabstandshaltern und die darin aufgenommenen Führungsrohre zusätzlich soweit fixiert werden, dass dies für den vorliegenden Zweck ausreichend ist.

Der Vorteil dieser Lösung besteht darin, dass durch das nur einseitige stirnseitige Fixieren, z. B. mittels zwei Schrauben, sehr schnell ein Lösen der gesamten Profilschiene vom Aufnahmeteil möglich ist, und danach die ganze an dieser Profilschiene fixierte Lage von Führungsrohren bewegt, beispielsweise etwas nach vorne gebogen werden kann, um Arbeiten an der dahinter liegenden Lage von Glasfasersträngen bzw. Führungsrohren durchzuführen.

Weiterhin steht die der Befestigungsseite gegenüberliegende Stirnfläche der Profilschienen für anderweitige Zwecke zur Verfügung, beispielsweise zum Anbringen eines Kennzeichnungsschildes, welches den Zweck, beispielsweise den Straßenzug oder die Hausnummer, der darin fixierten Glasfaserstränge eindeutig bezeichnet.

Ebenso können auf Schiebeabstandshaltern zwischen den einzelnen Schiebklammern Kennzeichnungen für die jeweils daneben befindliche Schiebeklammer angeordnet werden.

Eine solche Befestigungsvorrichtung kann aus wenigen unterschiedlichen Bauteilen nach Art eines Baukastens zu sehr unterschiedlichen Befestigungsvorrichtungen zusammengebaut werden.

Im minimalen Umfang besteht ein solcher Baukasten aus nur einer Sorte Profilschienen, die in der Regel aus Metall wie etwa Aluminium bestehen, und entweder passend in der Länge zu den Abmessungen des Verteilerschrankes hergestellt werden oder von einem Standardmaß aus auf die benötigte Länge abgelängt werden.

Benötigt wird ferner mindestens eine Sorte von Schiebeklammern, die in der Regel als Spritzgussteile hergestellte einstückige Teile aus Kunststoff sind.

Jede Schiebeklammer besitzt dabei einen Klammerbereich zum formschlüssigen Aufnehmen eines Führungsrohres, vorzugsweise in der Aufsicht betrachtet C-förmig gestaltet und nach vorne offen, wobei der Öffnungsbereich kleiner als 180° des Umfanges ist, so dass nach dem Eindrücken des Führungsrohres ein formschlüssiges Halten des Führungsrohres durch den Klammerbereich gegeben ist.

Beim Eindrücken verformt sich vorzugsweise das dabei noch leere Führungsrohr zu einem Oval und verformt sich danach elastisch zurück zu einem runden Querschnitt.

Andererseits umfasst jede Schiebeklammer einen Schiebebereich, der angepasst an den Aufnahmebereich der Profilschiene ist, so dass der Schiebebereich der Schiebeklammer auf diesen Aufnahmebereich in Verlaufsrichtung der Profilschiene aufgeschoben werden kann.

Vorzugsweise gibt es von den Schiebeklammern solche mit unterschiedlich großem Klammerbereich, also zur Aufnahme von Führungsrohren mit unterschiedlichen Durchmessern, wobei der Schiebebereich vorzugsweise unabhängig vom Durchmesser des Klammerbereiches immer gleich gestaltet ist.

Der Bausatz umfasst ferner ein Aufnahmeteil, welches einerseits an der Rückwand oder der Seitenwand des Verteilerschrankes befestigt, vorzugsweise verschraubt, werden kann und an dem wiederum die eine oder mehreren Profilschienen, insbesondere mit den Stirnseiten, fixiert, beispielsweise verschraubt, werden können.

Zum Baukasten gehört ferner ein Kennzeichnungsschild, welches an einem Ende der Profilschiene, vorzugsweise an dessen Stirnfläche, befestigt werden kann.

Bereits mit dieser Grundform des Baukastens lassen sich ersichtlich Befestigungsvorrichtungen mit variierenden Anzahl und Länge von Profilschienen erstellen und damit mit variierender Anzahl von Lagen und auch Anzahl der Führungsrohre pro Lage in einem Verteilerschrank.

Da die mit Schiebklammern, in denen sich auch bereits Führungsrohre befinden, bestückten Profilschienen sich leicht durch Lösen der seitlichen Verschraubung von dem Aufnahmeteil lösen lassen, können auch danach noch Arbeiten an den dahinter liegenden Lagen von Führungsrohren bzw. Glasfasersträngen durchgeführt werden.

Ein solcher Baukasten lässt sich durch Erweiterung der Anzahl von Einzelteilen noch wesentlich flexibler gestalten:
So können beispielsweise nicht nur eine sondern mehrere Sorten von Profilschienen verwendet werden, beispielsweise neben einer Sorte mit nur einem Aufnahmebereich auch eine Sorte mit nebeneinander, also im montierten Zustand übereinander, liegenden getrennten Aufnahmebereichen, die in der Regel auch eine größere Stabilität aufweisen.

Dort einzusetzende Schiebeklammern können einen Schiebebereich aufweisen, der in beide Aufnahmebereiche eingreift oder nur in einen der Aufnahmebereiche, wobei in letzterem Fall die Schiebeklammern so gestaltet sind, dass sie dann den daneben liegenden Aufnahmebereich nicht überdecken, sondern dort unabhängig vom ersten Aufnahmebereich weitere Schiebeklammern aufgeschoben werden können.

Der Aufnahmebereich ist vorzugsweise - egal ob ein oder mehrere Aufnahmebereiche an einer Profilschiene vorhanden sind - eine hinterschnittene, im montierten Zustand nach vorne offene Nut, während der Schiebebereich jeder Schiebeklammer einen oder mehrere in die Nut passende Schiebefortsätze aufweist.

Vorzugsweise weist jede Schiebeklammer in Verlaufsrichtung der Profilschiene beabstandet mehrere, beispielsweise drei, solche Schiebefortsätze auf, was vor allem der Vermeidung von einer zu großen Anhäufung von Kunststoffmaterial dient.

Vorzugsweise ist jede Schiebeklammer so aufgebaut, dass sie eine Grundplatte aufweist, die im montierten Zustand vor der Vorderfront der Profilschiene vertikal steht und von der aus nach hinten in den Aufnahmebereich der Profilschiene abragende passende Schiebefortsätze abragen.

Die Halteklammer für das Führungsrohr steht dagegen von der Grundplatte nach vorne ab und ist vorzugsweise über einen Abstandssteg auf Abstand von der Grundplatte gebracht.

Der Abstandssteg verläuft dabei vorzugsweise im montierten Zustand vertikal und seitlich des Abstandssteges verlaufen horizontale Versteifungsstege zwischen der Grundplatte und der Halteklammer, die in die Außenkontur der Halteklammer übergehen und dadurch ein Aufweiten der Halteklammer verhindern.

Da sich somit die Halteklammer nicht oder so gut wie nicht aufweiten lässt, kann ein Führungsrohr im leeren Zustand von vorne durch die Öffnung der Halteklammer - die weniger breit ist als der Außendurchmesser des Führungsrohres - eingedrückt werden, wobei sich das Führungsrohr zusammendrücken lassen muss. Erst nach der elastischen Rückverformung des Führungsrohres füllt dieses das Innere der Halteklammer aus.

Wenn dann der Glasfaserstrang in das Führungsrohr eingeblasen oder eingeschossen wurde, ist der Innenquerschnitt des Führungsrohres soweit ausgefüllt, dass es sich nicht mehr zusammendrücken lässt und im gefüllten Zustand auch nicht mehr nach vorne aus der Führungsklammer herausgezogen werden kann.

Zu diesem Zweck ist der Öffnungswinkel der Halteklammer geringer als 180°, um den nötigen Formschluss zum Führungsrohr zu erzielen, vorzugsweise zwischen 90° und 170°, insbesondere zwischen 100° und 130°.

Zusätzlich ist der Einlaufbereich der Halteklammer angeschrägt und verjüngt sich konisch nach innen, um ein Einschieben eines Führungsrohres zu erleichtern.

Die Schiebeplatzhalter, die einen vorgegebenen Abstand zwischen zwei benachbarten Schiebklammern vorgeben sollen, indem sie zwischen zwei Schiebeklammern angeordnet werden, besitzen ebenfalls eine Grundplatte und dieselben Schiebefortsätze wie die Schiebeklammern, jedoch fehlt die Halteklammer, die von der Grundplatte aus in die andere Richtung abragt.

Damit steht an der Grundplatte eine nach vorn gerichtete, vorzugsweise glatte und beschriftbare Frontfläche zum Beschriften zur Verfügung, mit deren Hilfe die z. B. unmittelbar daneben liegende Schiebeklammer gekennzeichnet werden kann.

Von den Schiebplatzhaltern können auch unterschiedliche Arten mit einer unterschiedlichen Länge in Verlaufsrichtung der Profilschienen z. B. der ganzen oder nur einer halben Länge der Grundplatte der Schiebeklammern zur Verfügung stehen, um unterschiedliche Abstände zwischen benachbarten Schiebeklammern einstellen zu können.

Das Kennzeichnungsschild, welches am einen Ende und vorzugsweise stirnseitig auf eine Profilschiene aufgebracht wird, dient nicht nur der Kennzeichnung dieser Profilschiene und der darin gehaltenen Führungsrohre, sondern auch dem stirnseitigen Verschluss der Profilschiene, um das Herausrutschen von Schiebklammern oder Schiebeabstandshaltern in diese Richtung zu verhindern.

Auf der anderen Seite ist das Gleiche gewährleistet durch das Aufnahmeteil, vorzugsweise ein Aufnahmeblech, an welchem die Profilschiene mit ihrer anderen Stirnfläche verschraubt ist.

Auch diese deckt den Aufnahmebereich der Profilschiene ebenso ab wie das Kennzeichnungsschild.

Das Kennzeichnungsschild ist vorzugsweise wannenförmig ausgebildet, welches beispielsweise mittels eines durchsichtigen Deckels verschlossen werden kann, um darunter eine gut lesbare Beschriftung unterzubringen.

Von der Rückseite des wannenförmigen Kennzeichnungsschildes steht mindestens ein Fortsatz im rechten Winkel zur Bodenfläche und in die der offenen Frontseite gegenüberliegende Richtung ab, der in einen hierfür vorgesehen Einsteckfortsatz der Profilschiene eingesteckt werden kann und der so positioniert ist, dass dann der Boden des Kennzeichnungsschildes die Stirnfläche, mindestens des Aufnahmebereiches, der Profilschiene abdeckt.

Um eine Drehung des eingesteckten Kennzeichnungsschildes zu verhindern, können diese weitere vom Boden abragende Fortsätze aufweisen, die in den Aufnahmebereich der Profilschiene stirnseitig eingreifen.

Die Profilschienen weisen in Ihrer Querschnittsform - außer dem C-förmigen, nach vorne offenen Aufnahmebereich - weitere Gestaltungsmerkmale auf:
Zum einen ist dies der von der Rückseite des Aufnahmebereiches nach hinten abstehende Einsteckfortsatz, der ebenfalls aus Gründen der leichteren Herstellbarkeit C-förmig gestaltet ist und der zum Einstecken des Fortsatzes des Kennzeichnungsschildes dient.

Ebenfalls C-förmig geformte, nach außen offene Befestigungsbereiche sind oberhalb und unterhalb des Aufnahmebereiches mit Öffnung nach oben bzw. unten bei der Profilschiene vorhanden und dienen dem Einschrauben von Schrauben von der Stirnseite her und zwar durch das Aufnahmeteil, insbesondere das Aufnahmeblech und dort entsprechend positionierte Bohrungen, hindurch zum Fixieren der Profilschiene an diesem Aufnahmeblech.

Das Aufnahmeteil, insbesondere das Aufnahmeblech, ist in der Seitenansicht vorzugsweise treppenförmig gestaltet für den von einer Lage der Führungsrohre zur nächsten zunehmenden Abstand zur Rückwand des Verteilerschrankes.

Auf jeder Stufe sind zwei Bohrungen zum Hindurchführen von Befestigungsschrauben in die Stirnfläche der Profilschienen hinein vorhanden.

Da die Führungsrohre mit den Glasfasern in Form eines Glasfasererdkabels zusammengefasst aus dem Boden von unten her in den Verteilerschrank ragen, ist auch eine dichte Einführung sowie Zugentlastung beim Eintritt in den Schaltschrank richtig, wie sie in den Figuren dargestellt ist, und sollte Bestandteil des Baukastens sein.

### c) Ausführungsbeispiele

Ausführungsformen gemäß der Erfindung sind im Folgenden beispielhaft näher beschrieben. Es zeigen:
- Fig. 1a:: die fast fertig montierte Befestigungsvorrichtung,
- Fig. 1b:: ein Detail aus Figur 1a,
- Fig. 2:: perspektivische Ansichten der Schiebeklammer 2,
- Fig. 3:: einzelne Seitenansichten der Schiebeklammer 2,
- Fig. 4:: Ansichten des Schiebeplatzhalters 3, und
- Fig. 5a,b:: eine Einführeinheit.

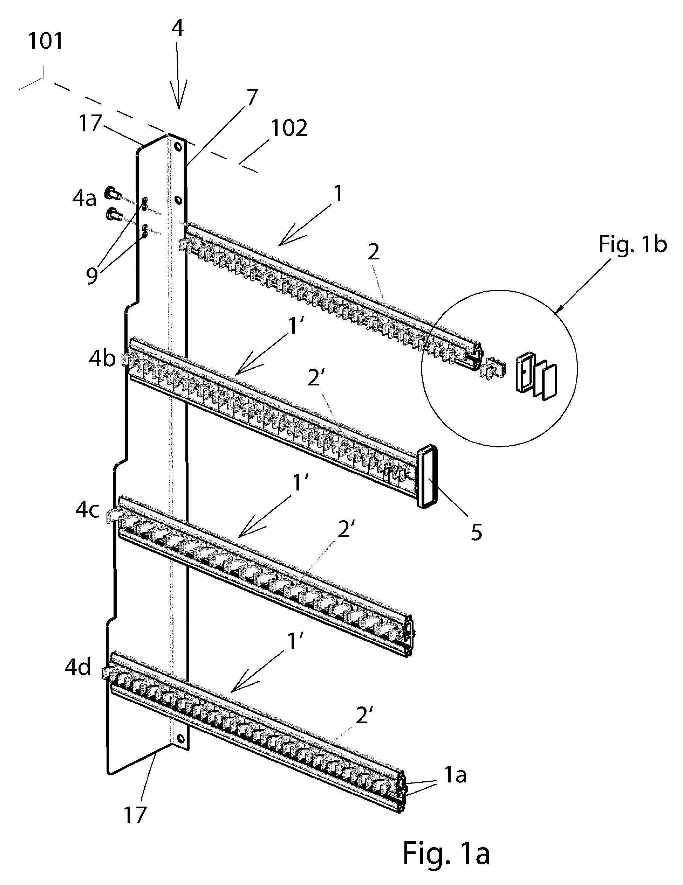

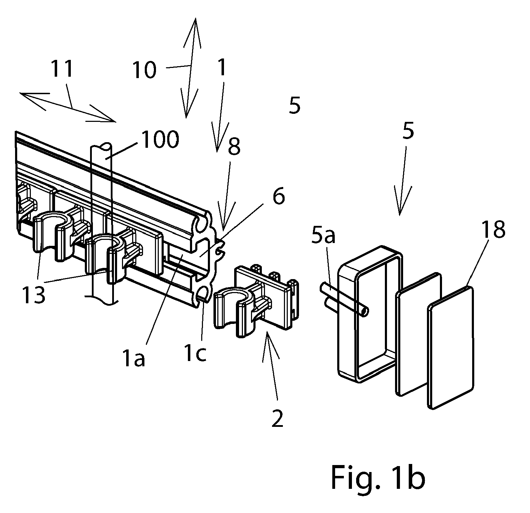

Figur 1a zeigt die Befestigungsvorrichtung mit mehreren Profilschienen 1, 1', die horizontal, also in Querrichtung 11, verlaufen und an denen die Schiebeklammern 2, 2' befestigt sind, in deren Halteklammer 13 - siehe Figur 1 b - jeweils ein Führungsrohr 100 für einen Glasfaserstrang aufgenommen ist, die vertikal, also in Längsrichtung 10, verlaufen.

Diese Profilschienen 1, 1' sind mit ihrer linken Stirnfläche an den Schienenschenkel 17 eines gewinkelten, vertikal verlaufenden Aufnahmebleches verschraubt, in dem durch entsprechende Durchgangsöffnungen 9 in diesem Schienenschenkel 17 von außen Schrauben durchgesteckt und in entsprechende Bereiche des Querschnittes der Profilschienen 1, 1' hinein verschraubt werden.

Gegenüber dem Schienenschenkel 17 ist der Befestigungsschenkel 7 um 90° gekrümmt hinter dem Anfang der Profilschienen 1, 1' auf der Innenrückwand 102 eines Verteilerschrankes 101 verschraubt.

Der Schienenschenkel 17 ist gestuft, so dass seine Vorderkante in den einzelnen Bereichen 4a, b, c, d, in denen jeweils Durchgangsöffnungen 9 zum Befestigen einer Profilschiene 1, 1' vorhanden sind, einen unterschiedlichen Abstand zum Befestigungsschenkel 7 aufweisen und damit auch die Profilschienen 1, 1', da die Durchgangsöffnungen 9 von der Vorderkante des Schienenschenkels immer den gleichen Abstand besitzen.

Bei den Profilschienen 1,1' zeigt - siehe Figur 1b - die Profilschiene 1 nur einen einzigen Aufnahmebereich 1a in Form einer hinterschnittenen Nut 6, während die Profilschiene 1' - wie im unteren Bereich der Figur 1a ersichtlich - zwei solcher übereinander liegender Aufnahmebereiche besitzt, zwischen denen sich ein Trennsteg befindet, der einstückiger Bestandteil der Profilschiene 1' ist.

Wie besser an der vergrößerten Detaildarstellung der Figur 1b ersichtlich, dient dieser Aufnahmebereich 1a, der hier eine hinterschnittene Nut 6 ist, zum Einschieben des Schiebebereiches 2b der Schiebeklammern 2, in dem die dortigen Schiebefortsätze 19 formschlüssig in die hinterschnittene Nut 6 passen.

Ebenso könnte jedoch der Schiebebereich 2b der Schiebeklammer 2 einen vorstehenden Aufnahmebereich 1a einer Profilschiene 1 von außen umgreifen.

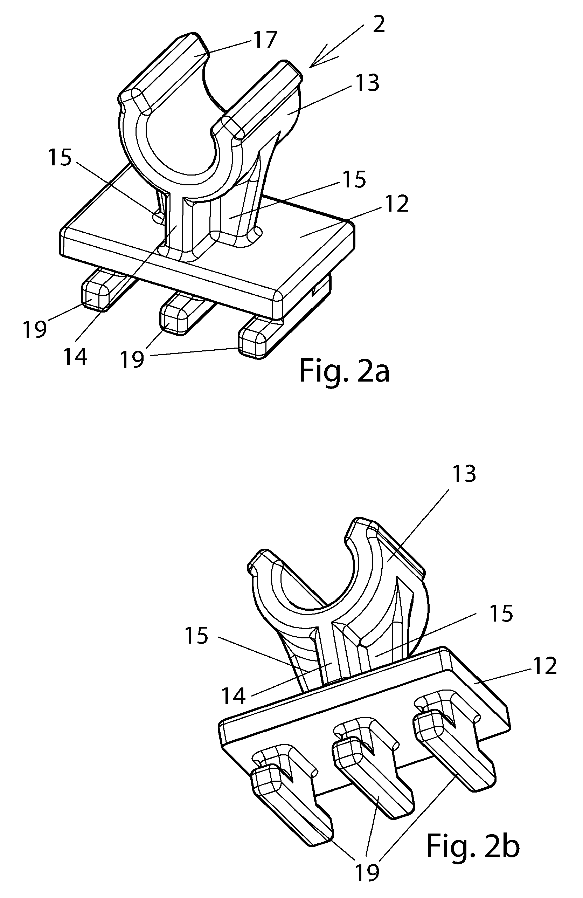

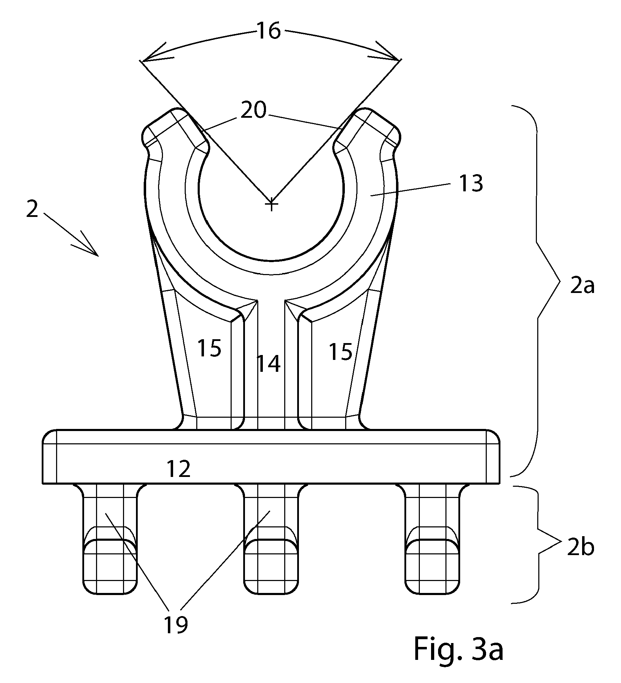

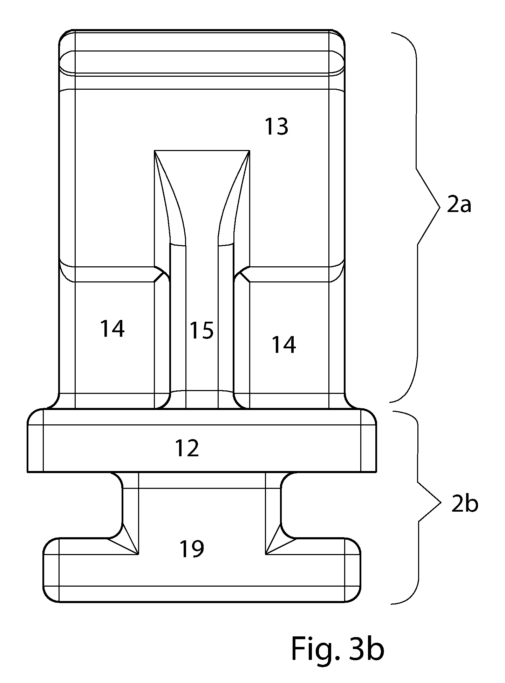

Die Schiebeklammer 2 umfasst- wie am besten die Figuren 2 und 3 zeigen - eine Grundplatte 12, von der aus in die eine Richtung die Schiebefortsätze 19 abragen - von denen in Verlaufsrichtung, der Querrichtung 11, der Profilschiene 1 in diesem Fall drei Schiebefortsätze 19 vorhanden sind - und in die andere Richtung von der Grundplatte 12 die C-förmige, mittels eines Abstandssteges 14 auf Abstand zur Grundplatte 12 gesetzte Halteklammer absteht, die von der Grundplatte 12 weg weisen, also die nach vorne offene, Einlaufbereich 20 aufweist.

Bezogen auf den Mittelpunkt des inneren freien Querschnittes der Halteklammer 13 besitzt der Öffnungswinkel 16 eine Größe von 70° - 170°.

Der Einlaufbereich 20 ist dabei konisch nach innen ausgeführt, um das Hineinschieben eines Führungsrohres 100 zu erleichtern.

Beidseits des Abstandssteges 14 sind in deren Mitte und im Winkel dazu stehend Versteifungsstege 15 angeordnet, die zwischen der Grundplatte 12 und der breitesten Stelle der Halteklammer 13 verlaufen und diese gegen ein Aufweiten abstützen. Dadurch ist die Halteklammer 13 sehr stabil und beim Eindrücken eines Führungsrohres 100 ist das Führungsrohr gezwungen, eine Verformung zu einem Oval zu vollziehen, die sich danach, im inneren Freiraum der Halteklammer 13, wieder zu einem runden Querschnitt elastisch zurück verformt.

Für die Profilschienen 1' mit zwei nebeneinander liegenden Aufnahmebereichen 1a werden dementsprechend spezielle Schiebeklammern 2' benötigt, deren Klammerbereich 2a mit Halteklammer 13, Abstandsteg 14 und Versteifungsstegen 15 denjenigen der zuvor beschriebenen Schiebeklammern 2 entspricht, jedoch möglicherweise einen größeren Durchmesser der Halteklammer 13 im Inneren besitzen, bei denen jedoch die Schiebefortsätze 19 einen mittigen Schlitz aufweisen müssen zum Aufnehmen des Steges zwischen den beiden Aufnahmebereichen 1a der Profilschiene 1'.

Zwischen zwei Schiebeklammern 2 kann auch jeweils ein Schiebeplatzhalter 3 in die Profilschiene 1, 1' eingeschoben werden, deren Aufgabe darin besteht, zwei benachbarte Schiebeklammer 2 oder 2' in einem definierten Abstand zueinander zu halten.

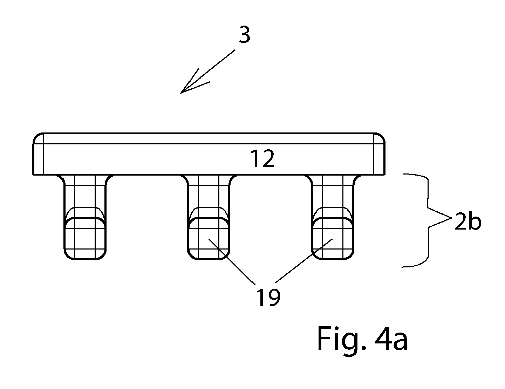

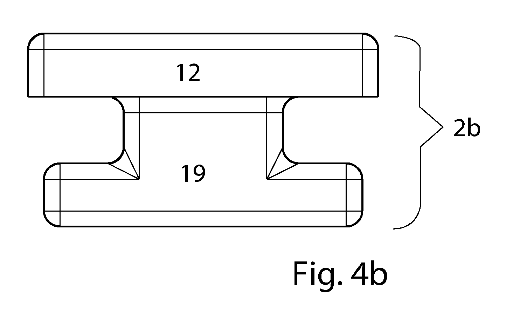

Wie die Figuren 4a, b zeigen, bestehen die Schiebeplatzhalter 3 aus der Grundplatte 12 mit daran angeordnetem Schiebebereich 2b, also den Schiebefortsätzen 19, jedoch ohne einen Klammerbereich 2a, so dass die Grundplatte 12 eine frei zugängliche Vorderseite aufweist, die auch zum Beschriften zur Verfügung steht.

Die Profilschienen 1, 1' besitzen außer ihrem Aufnahmebereich, also der hinterschnittenen Nut 6, die im montierten Zustand nach vorne offen ist, darüber und darunter anschließend je einen Befestigungsbereich 1c, der ebenfalls C-förmig im Querschnitt ist, jedoch mit der offenen Seite oben nach oben bzw. nach unten weist. Dieser Befestigungsbereich 1c dient zum Einschrauben der durch die Durchgangsöffnungen 9 des Aufnahmebleches 4 hindurch gesteckten Schrauben, die sich dann - vorzugsweise selbstschneidend - in den Innenumfang der Befestigungsbereiche 1c einschrauben lassen.

Da der Abstand der Befestigungsbereiche 1 c zueinander von der Art der Profilschiene 1, 1', also solchen mit nur einem oder zwei übereinander liegenden Aufnahmebereichen 1a, abhängt, sind in jedem Bereich 4a,b.. des Aufnahmebleches 4 jeweils zwei Paare von Durchgangsöffnungen 9 übereinander angeordnet, so dass in jedem Bereich 4a - d je nach Wunsch Profilschienen 1 oder 1' verschraubt werden können.

Da die Länge der Profilschiene 1, 1' vorzugsweise vollständig, also lückenlos, mit Schiebeklammern 2 und/oder Schiebeplatzhaltern 3 gefüllt sein soll, und die linke Stirnseite des Aufnahmebereiches 1a, also der Nut 6, von den Schienenschenkel 17 des Aufnahmebleches 4 verschlossen ist, muss das rechte Ende der Profilschienen 1, 1' - welches außer über die Schiebeklammern 2 mit den Führungsrohren 100 nicht anderweitig am Verteilerschrank 101 befestigt ist - auf andere Art und Weise verschlossen werden.

Wie Figur 1b zeigt, geschieht dies durch ein Kennzeichnungsschild 5, welches auf die in diesem Fall rechte Stirnfläche der Profilschiene 1 aufgesetzt und fixiert wird.

Das Kennzeichnungsschild 5 ist in diesem Fall wannenförmig ausgebildet mit einer Öffnung, die von der Profilschiene 1 weg weist und z. B. durch einen durchsichtigen Deckel 18 verschlossen werden kann, so dass eine dahinter liegende Beschriftung immer gut und sicher vor Verschmutzungen sichtbar ist, die an dieser Profilschiene 1 gehaltenen Führungsrohre 100 und die darin aufgenommenen Glasfaserstränge bezeichnet.

Das Kennzeichnungsschild 5 liegt im montierten Zustand mit der Außenseite seines Bodens so an der Stirnfläche der Profilschiene 1, 1' an, dass der Aufnahmebereich 1a, also in diesem Fall die hinterschnittene Nut 6, zumindest soweit abgedeckt wird, dass ein Herausrutschen von Halteklammern 2 oder Schiebeplatzhaltern 3 nicht mehr möglich ist.

Fixiert wird das Kennzeichnungsschild 5 dadurch, dass von der Rückseite des Aufnahmebereiches 1a der Profilschiene 1 ein im Querschnitt wiederum C-förmig geformt aber in diesem Fall nach hinten gerichteter, Einsteckfortsatz 8 angeordnet ist, der wie die Befestigungsbereiche 1c einstückig zusammen mit dem Aufnahmebereich ausgebildet ist.

Von der Rückseite des Bodens des Kennzeichnungsschildes 5 steht ein Einsteckzapfen 5a ab, der in diesen Einsteckfortsatz 8 stirnseitig hinein passt und dort kraftschlüssig oder formschlüssig verrastet. Weitere Vorsprünge von der Rückseite des Bodens des Kennzeichnungsschildes 5 können im montierten Zustand ein Verdrehen um diesen Einsteckzapfen 5a herum relativ zur Profilschiene 1 formschlüssig vermeiden helfen, in dem sie in einen der Befestigungsbereiche 1 c oder die Nut 6 eingreifen.

Die Erstreckung der Grundplatten 12 in Querrichtung 11, also die Verlaufsrichtung der Profilschienen 1, ist vorzugsweise für alle Arten von Schiebeklammern 2, 2' die gleiche.

Die Erstreckung dieser Grundplatte 12 bei den Schiebeplatzhaltern 3 ist vorzugsweise die gleiche wie bei Schiebeklammern 2, jedoch können zusätzliche Schiebeplatzhalter vorhanden sein, deren Erstreckung der Grundplatte 12 in diese Richtung nur der halben Erstreckung der Schiebeklammern 2 beträgt.

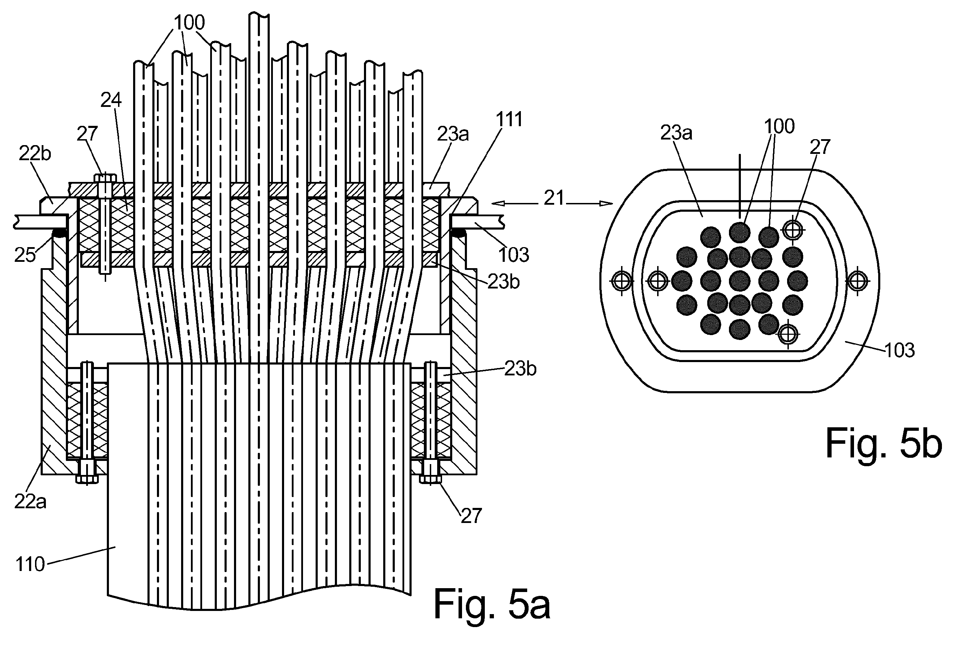

Die Figuren 5a und 5b zeigen die Einführeinheit, um das Glasfaser-Erdkabel 110 durch die Bodenplatte 103 abgedichtet und zugentlastet in den Verteilerschrank einzuführen und in die einzelnen Glasfaser-Erdkabel 110 aufzuspalten:
Wie die Schnittdarstellung zeigt, wird durch die in der Bodenplatte 103 vorhandene Einführöffnung 111 für das Erdkabel 110 von oben her eine Haltehülse 22b mit ihrem Hals hindurchgesteckt, auf deren Außenumfang sich ein Außengewinde befindet, und die mit ihrem Kragen auf der Oberseite der Bodenplatte 103 anliegt.

Auf dieses Außengewinde wird von unten her eine Haltemutter 22a aufgeschraubt, die in ihrem Innenumfang im nach oben gerichteten Frontbereich ein passendes Innengewinde besitzt, und an deren Stirnfläche sich ein O-Ring 25 oder eine andere Dichtung befindet, mit der beim weiteren Vorwärtsschrauben die Haltemutter 22a abdichtend gegen die Unterseite der Bodenplatte 103 gepresst wird.

Im Inneren von Haltemutter 22a und Haltemutter 22b verläuft dann das Erdkabel 110, dessen Ummantelung etwa in der Mitte der Länge der Haltemutter 22a endet, und von da ab die einzelnen Führungsrohre 100 ohne äußere Ummantelung und vorzugsweise gegeneinander etwas weiter beabstandet als im Erdkabel 110 weiter verlaufen.

Sowohl die einzelnen Führungsrohre 100 im oberen Bereich der Einführeinheit als auch das Glasfaser-Erdkabel 110 im unteren Bereich des Einführteiles müssen gegenüber dem Einführteil abgedichtet und zugentlastet werden:
Dies geschieht jeweils durch eine Presseinheit, bestehend aus zwei in Verlaufsrichtung des Erdkabels bzw. der Führungsrohre beabstandete Druckplatten 23a,b und eine dazwischen angeordnete elastische Zwischenplatte 24 mittels Schrauben 27, die sich durch die eine Druckplatte 23a hindurch erstrecken und mit ihrem Gewinde in der anderen Druckplatte 23b verschraubt sind und beim Festziehen diese heranziehen, wird die dazwischen befindliche elastische Zwischenplatte 24 in Längsrichtung zusammengepresst und verbreitert sich dadurch in Querrichtung, wodurch in Querrichtung eine Abdichtung erfolgt.

Bei der unteren Abdichtungseinheit ist in den Druckplatten 23a,b als auch der Zwischenplatte 24 eine zentrale Durchgangsöffnung in der Größe des Glasfaser-Erdkabels 110 vorhanden, durch welches dieses vor dem Festziehen der Druckschrauben 27 eingesteckt wird, so dass der Mantel des Erdkabels knapp oberhalb dieser unteren Zwischenplatte 24 endet. Die untere Druckplatte ist dabei einstückig zusammen mit dem unteren Ende der Haltemutter 22a ausgebildet, die obere Halteplatte ist ein separates Teil.

Bei der oberen Abdichteinheit sind in den Druckplatten 23a,b und der Zwischenplatte 24 zueinander fluchtende Durchgangsöffnungen entsprechend der Anzahl und Größe der einzelnen Führungsrohre 100, die sich in dem Glasfaser-Erdkabel 110 befinden, vorhanden. Diese Einheit wird von oben her über die freien Enden der Führungsrohre 100 aufgesteckt und in der Haltehülse 22b verklemmt, indem die obere Druckplatte 23a auf der Oberseite der Haltehülse 22b aufgelegt wird und dann die Druckschrauben 27 festgezogen werden.

Vorzugsweise sind von den Druckschrauben 27 außen um das Erdkabel bzw. die Führungsrohre 100 herum verteilt mehrere, insbesondere drei oder vier, Druckschrauben 27 angeordnet.

### BEZUGSZEICHENLISTE

- 1, 1': Profil-Schiene
- 1a: Aufnahmebereich
- 1c: Befestigungsbereich
- 2,': Schiebeklammern
- 2a: Klammerbereich
- 2b: Schiebebereich
- 3: Schiebeplatzhalter
- 4: Aufnahmeblech
- 4a - d: Bereich
- 5: Kennzeichnungsschild
- 5a: Einsteckzapfen
- 6: Nut
- 7: Befestigungsschenkel
- 8: Einsteckfortsatz
- 9: Durchgangsöffnung
- 10: Längsrichtung
- 11: Querrichtung
- 12: Grundplatte
- 13: Halteklammer
- 14: Abstandssteg
- 15: Versteifungsstege
- 16: Öffnungswinkel
- 17: Schienenschenkel
- 18: Deckel
- 19: Schiebefortsatz
- 20: Einlaufbereich
- 21: Bodenmuffe
- 22a: Haltemutter
- 22b: Haltehülse
- 23a, b: Druckplatte
- 24: elastische Zwischenplatte
- 25: O-Ring
- 26: Außengewinde
- 26': Innengewinde
- 27: Druckschraube

- 100: Führungsrohr
- 101: Verteilerschrank
- 102: Rückwand
- 103: Bodenplatte
- 110: Glasfaser-Erdkabel
- 111: Einführöffnung

## Patentansprüche

1. Baukasten zum Herstellen einer Befestigungsvorrichtung für die in einer Längsrichtung (**10**) verlaufenden Führungsrohre (**100**) von Glasfaserkabeln in Kabel-Verteilerschränken (**101**) mit
- wenigstens einer Sorte von jeweils wenigstens einer in Querrichtung (**11**) verlaufenden Profilschiene (**1**) mit
- einem in der Querschnittsform der Profilschiene (**1**) ausgebildeten, C-förmigen, nach vorne offenen, Aufnahmebereich (**1a**) in Form einer hinterschnittenen Nut (**6**) zum formschlüssigen verschiebbaren Aufnehmen von Schiebeklammern (**2**) oder Schiebeplatzhaltern (**3**), und
- je einem C-förmigen, nach aussen offenen, Befestigungsbereich (**1**c) oberhalb des Aufnahmebereiches (**1**a) mit Öffnung nach oben und unterhalb des Aufnahmebereiches (**1**a) mit Öffnung nach unten zum Einschrauben von Schrauben in den Innen-Umfang des Befestigungsbereiches (**1**c),
- verschiedenen Sorten von jeweils mehreren Schiebeklammern (**2**) mit
- je einem C-förmigen Klammerbereich (**2**a) mit jeweils unterschiedlichem Durchmesser zum formschlüssigen Aufnehmen eines Führungsrohres (**100**) und
- je einem in di Nut (**6**) passenden Schiebebereich (**2**b) zum Verschieben in Verlaufsrichtung, der Querrichtung (**11**) der Profilschiene (**1**),
- wenigstens einer Sorte von jeweils mehreren Schiebeplatzhaltern (**3**), die in Verlaufsrichtung, der Querrichtung (**11**) verschiebbar in die Nut(**6**) der Profilschiene (**1**) passen,
- wenigstens einem Aufnahmeteil (**4**) mit Durchgangsöffnungen (**9**) zum daran Befestigen der Profilschiene (**1**) mit seiner Stirnseite, wobei das Aufnahmeteil (**4**) im daran montierten Zustand wenigstens den Aufnahmebereich (**1**a) der Stirnfläche der Profilschiene (**1**) abdeckt.
- wenigstens einem an der Profilschiene (**1**) befestigbaren Kennzeichnungsschild (**5**), welches im daran montierten Zustand den Aufnahmebereich (**1**a) der Stirnfläche der Profilschiene (**1**) wenigstens soweit abdeckt, dass ein Herausrutschen von Halteklammern (**2**) oder Schiebeplatzhaltern (**3**) nicht mehr möglich ist.

2. Baukasten nach Anspruch **1**,
**dadurch gekennzeichnet, dass**
- die Profilschiene (**1**) mehrere in ihrer Verlaufsrichtung nebeneinander liegende, voneinander getrennte Aufnahmebereiche (**1**a, b) aufweist.

3. Baukasten nach einem der vorhergehenden Ansprüche,
**dadurch gekennzeichnet, dass**
- die Profilschiene (**1**) auf der Rückseite einen Fortsatz, insbesondere einen C-förmigen Einsteckfortsatz (**8**) zum Einstecken oder Einschrauben des Kennzeichnungsschildes (**5**) aufweist.

4. Baukasten nach einem der vorhergehenden Ansprüche,
**dadurch gekennzeichnet, dass**
- das Aufnahmeteil, insbesondere das Aufnahmeblech (**4**), Durchgangsöffnungen (**9**) aufweist einerseits in Positionen und relativ zueinander beabstandet passend zu den Befestigungsbereich**en** (**1**c) der Profilschienen (**1**) und/oder
- die Profilschiene (**1**) ein Strangpressprofil, insbesondere aus Metall, insbesondere aus Aluminium, ist.

5. Baukasten nach einem der vorhergehenden Ansprüche,
**dadurch gekennzeichnet, dass**
- die Schiebeklammer (**2**) einstückig hergestellt ist und insbesondere ein Spritzgussteil aus Kunststoff ist und/oder
- die Schiebeklammer (**2**) eine Grundplatte (**12**) aufweist, von der nach hinten in den Aufnahmebereich (**1**a) passende Schiebefortsätze (**19**) abragen und nach vorne die Halteklammer (**13**) für das Führungsrohr (**100**) abragt.

6. Baukasten nach einem der vorhergehenden Ansprüche,
**dadurch gekennzeichnet, dass**
- die Halteklammer (**13**) C-Form besitzt und insbesondere über einen Abstandssteg (**14**) von der Grundplatte (**12**) beabstandet ist und/oder
- seitlich des Abstandssteges (**14**) Versteifungsstege (**15**) zwischen der Grundplatte (**12**) und der Halteklammer (**13**) so verlaufen, dass ein Aufweiten der Halteklammer (**13**) verhindert wird.

7. Baukasten nach einem der vorhergehenden Ansprüche,
**dadurch gekennzeichnet, dass**
- der Öffnungswinkel (**10**) der Halteklammer (**13**) zwischen **90**° und **170**°, insbesondere zwischen **100**° und **130**°, beträgt und/oder
- der Einlaufbereich (**17**) der Halteklammer (**13**) angeschrägt ist und sich nach innen konisch verjüngt und/oder die Innen-Umfangskante der Halteklammer (**13**) ausgeschrägt oder gerundet ist.

8. Baukasten nach einem der vorhergehenden Ansprüche,
**dadurch gekennzeichnet, dass**
- der Bausatz Schiebeplatzhalter (**3**) umfasst und die Abstandshalter (**3**) eine Grundplatte (**13**) und von dieser nach hinten abragende Schiebefortsätze (**19**) aufweist, die in den Aufnahmebereich (**1**a) der Profilschiene (**1**) passen und/oder
- das Kennzeichnungsschild (**5**) wannenförmig ausgebildet ist mit wenigstens einem Einsteckzapfen (**5**a), der auf der der offenen Frontseite gegenüberliegenden Seite vom Boden abragt und z. B. in den Einsteckfortsatz (**8**) der Profilschiene (**1**) passt.

9. Baukasten nach einem der vorhergehenden Ansprüche,
**dadurch gekennzeichnet, dass**
- das Kennzeichnungschild (5) einen die offene Seite verschließenden, durchsichtigen Deckel (18) umfasst und/oder
- die Schiebeplatzhalter (3) aus einem beschreibbaren Material auf der Oberseite der Grundplatte (12) bestehen.

10. Baukasten nach einem der vorhergehenden Ansprüche,
**dadurch gekennzeichnet, dass**
die Schiebeplatzhalter (3) in Verlaufsrichtung der Profilschiene (1) hinsichtlich ihrer Grundplatte (12) die gleiche oder eine halbe Länge der Grundplatte (**12**) der Schiebeklammern (**2**) besitzen.

11. Baukasten nach einem der vorhergehenden Ansprüche,
**dadurch gekennzeichnet dass**
- der Baukasten eine Bodenmuffe (**21**) zum dichten und zugentlastenden Durchführen des Glasfaser-Erdkabels (**110**) durch die Einführöffnung (**111**) der Bodenplatte (**113**) des Verteilerschrankes (**101**), und insbesondere
- die Bodenmuffe (**21**) aus einer mit der Bodenplatte (**103**) verschraubten Führungseinheit und wenigstens einer darin angeordneten Zugentlastungs-Einheit besteht.

12. Baukasten nach Anspruch **11**,
**dadurch gekennzeichnet, dass**
die Führungseinheit aus einer Haltehülse (**22b**) besteht, die sich mit ihrem Hals durch die Gehäuseeinführöffnung (**111**) der Bodenplatte (**103**) hindurch erstreckt und mit ihrem verbreiterten Flansch auf deren einer Seite anliegt und auf dem Hals ein Außengewinde (**26**) aufweist sowie einer Haltemutter (**22a**), die ein dazu passendes Innengewinde (**26**') aufweist und auf den Hals (**22a**) aufschraubbar ist, sowie insbesondere einem O-Ring (**25**) zwischen Haltemutter (**22a**) und Bodenplatte (**103**).

13. Baukasten nach einem der Ansprüche **11** oder **12**,
**dadurch gekennzeichnet, dass**
eine erste Zugentlastungseinheit, passend in den Innenumfang der Haltehülse (22b) vorhanden ist, bestehend aus zwei axial beabstandeten Druckplatten (23a,b), einer dazwischen angeordneten elastischen Zwischenplatte (24), wobei an allen drei Platten zueinander fluchtende Durchgangsöffnungen für die Führungsrohre (100) der Glasfaserkabel vorhanden sind, mehrere Druckschrauben (27), die die eine, auf der Außenseite der Bodenmuffe liegende, Druckplatte (23a) durchdringen und mit ihrem Gewinde in der anderen Druckplatte (23b) hindurchgeschraubt sind, wobei insbesondere die äußere Druckplatte (**23**a) auf der Stirnfläche der Haltehülse (**22**b) aufliegt.

14. Baukasten nach einem der Ansprüche **11 - 13**,
**dadurch gekennzeichnet, dass**
- eine zweite Druckentlastungseinheit zwischen dem Außenumfang des Glasfasererdkabels (**110**) und der Haltemutter (**22**a) im Bereich abseits des Innengewindes (**26**') umfasst, wobei insbesondere
- die zweite Zugentlastungseinheit zwei axial beabstandeten Druckplatten (**23**a,b), einer dazwischen angeordneten elastischen Zwischenplatte (**24**), mit einer zentralen Durchgangsöffnung für das Glasfasererdkabel (**110**) umfasst.

15. Baukasten nach Anspruch **14**,
**dadurch gekennzeichnet, dass**
- die auf der Außenseite der Bodenmuffe (**21**) liegende Druckplatte (**23**a) der zweiten Zugentlastungseinheit einstückig zusammen mit der Haltemutter (**22**a) ausgebildet ist, und/oder
- die Haltemutter einen Innendurchmesser besitzt, der zumindest abseits des Innengewindes (**26**') größer ist als der Außendurchmesser des Glasfaser-Erdkabels (**110**).

16. Befestigungsvorrichtung für die in Längsrichtung (**10**) verlaufenden Führungsrohre (**100**) von Glasfaserkabeln in Kabel-Verteilerschränken (**101**), erstellt aus dem Bausatz gemäß einem der vorhergehenden Ansprüche, mit
- wenigstens einer in Querrichtung (**11**) verlaufenden Profilschiene (**1**),
- mehreren formschlüssig entlang der Profilschiene (**1**) verschiebbaren Schiebeklammern (**2**) mit einem C-förmigen Klammerbereich (**2a**) für je ein Führungsrohr (**100**),
**dadurch gekennzeichnet, dass**
- die Profilschiene (**1**) in ihrer Verlaufsrichtung vollständig besetzt ist mit Schiebeklammern (**2**) und ggfs Schiebeplatzhaltern (**3**),
- die Profilschiene (**1**) nur mit einer ihrer Stirnseiten an einem in Längsrichtung (**10**) verlaufenden Aufnahmeteil, insbesondere einem Aufnahmeblech (**4**), verschraubt ist,
- die andere Stirnfläche der Profilschiene (**1**) wenigstens soweit von einem Kennzeichnungsschild (**5**) abgedeckt wird, dass ein Herausrutschen von Schiebeklammern (**2**) oder Schiebeplatzhaltern (**3**) nicht mehr möglich ist.

17. Befestigungsvorrichtung nach Anspruch **16**,
**dadurch gekennzeichnet, dass**
die dem Aufnahmeteil gegenüberliegende Stirnfläche der Profilschiene (**1**) von einem Kennzeichnungschild (**5**) verschlossen ist, welches insbesondere in die Stirnseite der Profilschiene (**1**) hinein verschraubt oder verrastet ist.

18. Befestigungsvorrichtung nach Anspruch **16** oder 1**7**,
**dadurch gekennzeichnet, dass**
mehrere, in der Tiefe unterschiedlich positionierte Profilschienen (**1**) vorhanden sind, die vorzugsweise auch auf unterschiedlichen Höhen montiert sind.

## Claims

1. A kit for producing an attachment device for support tubes (100) of glass fiber cables in cable distribution cabinets (101) extending in a longitudinal direction (10) comprising:
- at least one type of at least one profile rail (1) extending in at least one transversal direction (11) including
- a receiving portion (1a) configured C-shaped according to a cross section of the profile rail (1) open in a forward direction and configured as an undercut groove (6) for form locking sliding engagement of sliding clamps (2) or sliding spacers (3), and
- a respective C- shaped outward open attachment portion (1c) above the receiving portion (1 a) with an upward opening and with a downward opening below the receiving portion (1 a) for threading in screws into an inner circumference of the attachment portion (1 c),
- various types of plural sliding clamps (2) including,
- a respective C-shaped clamping portion (2a) respectively with a different diameter for forming locking receiving of a support tube (100), and
- a respective sliding portion (2b) fitting into the groove (6) for sliding in an extension direction, the transversal direction (11) of the profile rail (1),
- at least one type of respectively plural sliding spacers (3) that fit slidably into the groove (6) of the profile rails (1) in the extension direction, the transversal direction,
- at least one receiving element (4) with pass through openings (9) for attaching the profile rail (1) with its face, wherein the receiving element (4) in mounted condition covers at least the receiving portion (1 a) of the face of the profile rail,
- at least one designation label (5) that is attachable at the profile rail (1) which covers the receiving portion (1 a) of the face of the profile rail (1) in mounted condition at least so far that a sliding out of support clamps (2) or sliding spaces (3) is not possible anymore.

2. The kit according to claim 1,
**characterized in that**
the profile rail (1) includes plural receiving portions (1 a, b) that are arranged adjacent to one another in the extension direction of the profile rail and separated from each other.

3. The kit according to one of the preceding claims,
**characterized in that**
- the profile rail (1) includes a protrusion at its back side, in particular a C-shaped protrusion (8) for inserting or threading in the designation label (5).

4. The kit according to one of the preceding claims,
**characterized in that**
- the receiving element, in particular the receiving plate (4) includes pass through openings (9) on the one hand side in positions and offset relative to each other adapted to the attachment portions (1 c) of the profile rails and/or,
- the profile rail (1) is an extruded press profile, in particular made from metal, in particular made from aluminum.

5. The kit according to one of the preceding claims,
**characterized in that**
- the sliding clamp (2) is integrally produced in one piece and in particular an injection molded plastic component, and/or,
- the sliding clamp (2) includes a base plate (12) from which sliding protrusions (19) extend in rearward direction which fit into the receiving portion (1 a) and the support clamp (13) for the support tube (100) protrudes in forward direction.

6. The kit according to one of the preceding claims,
**characterized in that**
- the sliding clamp (13) is C-shaped and is in particular offset from the base plate (12) by a spacer bar (14) and/or
- stiffening bars (15) between the base plate (12) and the support clamp (13) extend laterally with respect to the spacer bar (14) so that an expansion of the support bracket (13) is prevented.

7. The kit according to one of the preceding claims,
**characterized in that**
- an opening angle (10) of the support bracket (13) is between 90° and 170°, in particular between 100° and 130°, and/or
- an inlet portion (17) of the support clamp (13) is beveled and tapers conically in an inward direction and/or an inner circumferential edge of the support clamp (13) is beveled or rounded.

8. The kit according to one of the preceding claims,
**characterized in that**
- the kit includes sliding spacers (3) and the sliding spacers (3) include a base plate (13) and sliding protrusions (19) extending from the base plate, wherein the sliding protrusions (19) fit into a receiving portion (1a) of the profile rail (1), and/or
- the designation label (5) is configured tub shaped with at last one insertion pinion (5a) which protrudes from the base on a side that is opposite from the open front side and which fits e.g. into the insertion protrusion (8) of the profile rail (1).

9. The kit according to one of the preceding claims,
**characterized in that**
- the designation label (5) includes a transparent cover (18) closing the open side, and/or
- the sliding spacers (3) are made from an inscribable material on a top side of the base plate (12).

10. The kit according to one of the preceding claims,
**characterized in that** the sliding spacers (3) in an extension direction of the profile rail (1) with respect to the base plate (12) have an identical or a half length of the base plate (12) of the sliding clamps (2).

11. The kit according to one of the preceding claims,
**characterized in that**
- the kit includes a base grommet for tight and pull relieved pass through of the glass fiber ground cable (110) through the insertion opening (111) of the base plate (113) of the distribution cabinet (101) and in particular
- the base grommet (21) is made from a support unit that is threaded together with the base plate (103) and at least one pull relief unit arranged therein.

12. The kit according to claim 11,
**characterized in that**
the support unit includes a support sleeve (22b) which extends with its neck through the housing insertion opening (111) of the base plate (103) and which contacts with its broadened flange on one of its sides and which includes an exterior thread (26) at its neck and a retaining nut (22a) which includes a corresponding interior thread (26') and which is threadable onto the neck (22a) and in particular an O-ring (25) between the retaining nut (22a) and the base plate (103).

13. The kit according to one of the claims 11 or 12,
**characterized in that**
the first pull relief unit is provided fitting into an interior circumference of the support sleeve (22b) and includes two axially offset pressure plates (23a, b) and an elastic intermediary plate (24) arranged there between, wherein aligned pass through bore holes for the support tubes (100) of the glass fiber cables are provided at all three plates, plural compression bolts which penetrate a pressure plate (23a) arranged on an outside of the base grommet and which are threaded with their thread into the other pressure plate (23b), wherein in particular the outer pressure plate (23a) contacts the face of the support sleeve (22b).

14. The kit according to one of the claims 11 - 13,
**characterized in that**
- a second pressure relief unit is provided between the outer circumference of the glass fiber ground cable (110) and the retaining nut (22a) in a portion that is remote from an inner thread (26'), wherein in particular
- the second pull relief unit includes two axially offset pressure plates (23a, b), an elastic intermediary plate (24) arranged there between with a central pass through opening for the glass fiber ground cable (110).

15. The kit according to claim 14,
**characterized in that**
- the pressure plate (23a) arranged on an outside of the base grommet (21) of the second pull relief unit is configured integral in one piece with the retaining nut (22a) and/or
- the retaining nut has an inner diameter which is at least remote from the inner thread (26') greater than the outer diameter of the glass fiber ground cable (110).

16. An attachment device for support tubes (100) of glass fiber cables extending in a longitudinal direction (10) in cable distribution cabinets (101) produced from the kit according to one of the preceding claims, comprising:
- at least one profile rail (1) extending in the transversal direction (11),
- plural sliding clamps (2) that are moveable in a form locking manner along the profile rail (1) with a C-shaped clamping portion (2a) for a respective support tube (100), **characterized in that**
- the profile rail (1) is completely filled with sliding clamps (2) and/or sliding spacers (3) in its extension direction,
- the profile rail (1) is bolted only with one of its faces at a receiving element extending in the longitudinal direction (10), in particular a receiving plate (4),
- the other face of the profile rail (1) is covered at least so far by a designation label (5) so that a sliding out of sliding clamps (2) or sliding spacers (3) is not possible any more.

17. The attachment device according to claim 16,
**characterized in that**
the face of the profile rail (1) that is arranged opposite to the receiving element is closed by a designation label (5) which is in particular threaded or interlocked into the face of the profile rail (1).

18. The attachment device according to claim 16 or 17,
**characterized in that** plural profile rails (1) are provided that are positioned at different depths, wherein the profile rails are advantageously also mounted at different levels.

## Revendications

1. Système modulaire pour fabriquer un dispositif de fixation pour les tubes de guidage (100), s'étendant dans une direction longitudinale (10), de câbles de fibres optiques dans des armoires de distribution de câbles (101), avec
- au moins une sorte à chaque fois d'au moins un rail profilé (1) s'étendant dans la direction transversale (11), avec
-- une zone de logement (1 a) qui a la forme d'une rainure à contre-dépouille (6) et qui est conçue en forme de C et ouverte vers l'avant dans la forme de section transversale du rail profilé (1) pour loger de manière déplaçable avec concordance de forme des crochets coulissants (2) ou des garde-places (3), et
-- à chaque fois une zone de fixation (1c), en forme de C et ouverte vers l'extérieur, au-dessus de la zone de logement (1a) avec ouverture vers le haut et au-dessous de la zone de logement (1a) avec ouverture vers le bas pour visser des vis dans le pourtour intérieur de la zone de fixation (1 c),
- différentes sortes à chaque fois de plusieurs crochets coulissants (2), avec
-- à chaque fois une zone de crochet (2a) en forme de C avec à chaque fois un diamètre différent pour loger avec concordance de forme un tube de guidage (100) et
-- à chaque fois une zone coulissante (2b) qui est adaptée dans la rainure (6) et qui sert à coulisser dans la direction principale, la direction transversale (11) du rail profilé (1),
- au moins une sorte à chaque fois de plusieurs garde-places coulissants (3) qui sont adaptés dans la rainure (6) du rail profilé (1) de manière à pouvoir se déplacer dans la direction principale, la direction transversale (11),
- au moins une partie de logement (4) avec des ouvertures de passage (9) pour la fixation du rail profilé (1) avec son côté frontal, la partie de logement (4) à l'état monté recouvrant alors au moins la zone de logement (1a) de la surface frontale du rail profilé (1),
- au moins une plaque d'identification (5) qui peut être fixée au rail profilé (1) et qui recouvre à l'état monté la zone de logement (1 a) de la surface frontale du rail profilé (1) au moins jusqu'à un point auquel un glissement de crochets coulissants (2) ou de garde-places coulissants (3) hors de la structure n'est plus possible.

2. Système modulaire selon la revendication 1,
**caractérisé en ce que**
le rail profilé (1) comporte plusieurs zones de logement (1a, b) séparées les unes des autres et situées les unes à côté des autres dans la direction principale.

3. Système modulaire selon l'une des revendications précédentes,
**caractérisé en ce que**
sur le côté arrière, le rail profilé (1) comporte un prolongement, notamment un prolongement d'insertion (8) en forme de C pour insérer ou visser la plaque d'identification (5).

4. Système modulaire selon l'une des revendications précédentes,
**caractérisé en ce que**
- la partie de logement, notamment la tôle de logement (4), comporte des ouvertures de passage (9) adaptées, par leurs positions et par leurs distances les unes par rapport aux autres, aux zones de fixation (1c) des rails profilés (1) et/ou
- le rail profilé (1) est un profilé extrudé, notamment en métal, notamment en aluminium.

5. Système modulaire selon l'une des revendications précédentes,
**caractérisé en ce que**
- le crochet coulissant (2) est fabriqué d'une seule pièce et est notamment une pièce moulée par injection en plastique et/ou
- le crochet coulissant (2) comporte une plaque de fond (12) à partir de laquelle des prolongements coulissants (19) adaptés dans la zone de logement (1a) dépassent vers l'arrière et le crochet de maintien (13) pour le tube de guidage (100) dépasse vers l'avant.

6. Système modulaire selon l'une des revendications précédentes,
**caractérisé en ce que**
- le crochet de maintien (13) a une forme en C et est à une certaine distance de la plaque de fond (12) notamment par le biais d'une entretoise (14) et/ou
- à côté de l'entretoise (14), des traverses de renfort (15) s'étendent entre la plaque de fond (12) et le crochet de maintien (13) de manière à empêcher tout élargissement du crochet de maintien (13).

7. Système modulaire selon l'une des revendications précédentes,
**caractérisé en ce que**
- l'angle d'ouverture (10) du crochet de maintien (13) est compris entre 90° et 170°, notamment entre 100° et 130°, et/ou
- la zone d'entrée (17) du crochet de maintien (13) est biseautée et se rétrécit en cône vers l'intérieur et/ou l'arête périphérique intérieure du crochet de maintien (13) est biseautée ou arrondie.

8. Système modulaire selon l'une des revendications précédentes,
**caractérisé en ce que**
- le système modulaire comprend des garde-places coulissants (3) et le dispositif d'écartement (3) comporte une plaque de fond (13) et des prolongements coulissants (19) qui dépassent de celle-ci vers l'arrière et qui sont adaptés dans la zone de logement (1a) du rail profilé (1), et/ou
- la plaque d'identification (5) est conçue en forme de cuvette avec au moins un tenon d'insertion (5a) qui dépasse du fond du côté opposé au côté frontal ouvert et qui est adapté par exemple dans le prolongement d'insertion (8) du rail profilé (1).

9. Système modulaire selon l'une des revendications précédentes,
**caractérisé en ce que**
- la plaque d'identification (5) comprend un couvercle (18) transparent et fermant le côté ouvert et/ou
- les garde-places coulissants (3) sont, sur le dessus de la plaque de fond (12), en un matériau sur lequel on peut écrire.

10. Système modulaire selon l'une des revendications précédentes,
**caractérisé en ce que**
dans la direction principale du rail profilé (1), les garde-places coulissants (3) ont quant à leur plaque de fond (12) la même longueur ou la moitié de la longueur de la plaque de fond (12) des crochets coulissants (2).

11. Système modulaire selon l'une des revendications précédentes,
**caractérisé en ce que**
- le système modulaire comporte un manchon de fond (21) pour assurer un passage étanche et sans tension du câble souterrain de fibres optiques (110) par l'ouverture d'introduction (111) de la plaque de fond (113) de l'armoire de distribution (101), et notamment
- le manchon de fond (21) est constitué d'une unité de guidage vissée à la plaque de fond (103) et d'au moins une unité de soulagement de tension agencée à l'intérieur.

12. Système modulaire selon la revendication 11, **caractérisé en ce que** l'unité de guidage est constituée d'un manchon de maintien (22b) qui s'étend avec son collet à travers l'ouverture d'introduction de boîtier (111) de la plaque de fond (103) et qui s'appuie avec sa flasque élargie sur un côté de celle-ci, qui comporte sur le collet un filetage extérieur (26) ainsi qu'un écrou de maintien (22a) qui comporte un filetage intérieur correspondant (26') et qui peut être vissé sur le collet (22a), ainsi que notamment un joint torique (25) entre l'écrou de maintien (22a) et la plaque de fond (103).

13. Système modulaire selon l'une des revendications 11 ou 12, **caractérisé en ce que**
il est prévu une première unité de soulagement de tension, adaptée dans le pourtour intérieur du manchon de maintien (22b), constituée de deux plaques de pression (23a, b) à une certaine distance axiale l'une de l'autre, d'une plaque intermédiaire (24) élastique agencée entre, des ouvertures de passage alignées pour les tubes de guidage (100) des câbles à fibres optiques étant prévues sur les trois plaques, plusieurs vis de pression (27) qui traversent une plaque de pression (23a) située sur l'extérieur du manchon de fond et qui sont vissées par leur filetage dans l'autre plaque de pression (23b) étant prévues, la plaque de pression extérieure (23a) reposant notamment sur la surface frontale du manchon de maintien (22b).

14. Système modulaire selon l'une des revendications 11 à 13, **caractérisé en ce que**
- une deuxième unité de soulagement de tension est prévue entre le pourtour extérieur du câble souterrain de fibres optiques (110) et l'écrou de maintien (22a) dans la zone à l'écart du filetage intérieur (26'),
- la deuxième unité de soulagement de tension comprenant notamment deux plaques de pression (23a, b) à une certaine distance axiale l'une de l'autre, une plaque intermédiaire (24) élastique agencée entre, avec une ouverture de passage centrale pour le câble souterrain de fibres optiques (110).

15. Système modulaire selon la revendication 14, **caractérisé en ce que**
- la plaque de pression (23a), située sur le côté extérieur du manchon de fond (21), de la deuxième unité de soulagement de tension est conçue d'une seule pièce avec l'écrou de maintien (22a), et/ou
- l'écrou de maintien a un diamètre intérieur qui, au moins à l'écart du filetage intérieur (26'), est plus grand que le diamètre extérieur du câble souterrain de fibres optiques (110).

16. Dispositif de fixation pour les tubes de guidage (100), s'étendant dans la direction longitudinale (10), de câbles à fibres optiques dans des armoires de distribution de câbles (101), fabriqué à partir du système modulaire selon l'une des revendications précédentes, avec
- au moins un rail profilé (1) s'étendant dans la direction transversale (11),
- plusieurs crochets coulissants (2), pouvant être déplacés avec concordance de forme le long du rail profilé (1), avec une zone de crochet (2a) en forme de C pour un tube de guidage (100) à chaque fois,
**caractérisé en ce que**
- le rail profilé (1) est entièrement occupé, dans sa direction principale, avec des crochets coulissants (2) et le cas échéant avec des garde-places coulissants (3),
- le rail profilé (1) est vissé seulement par l'un de ses côtés frontaux à une partie de logement, notamment une tôle de logement (4), s'étendant dans la direction longitudinale (10),
- l'autre côté frontal du rail profilé (1) est recouvert par une plaque d'identification (5) au moins jusqu'à un point auquel un glissement de crochets coulissants (2) ou de garde-places coulissants (3) hors de la structure n'est plus possible.

17. Dispositif de fixation selon la revendication 16,
**caractérisé en ce que**
la surface frontale, opposée à la partie de logement, du rail profilé (1) est fermée par une plaque d'identification (5) qui est notamment vissée ou enclenchée dans le côté frontal du rail profilé (1).

18. Dispositif de fixation selon l'une des revendications 16 ou 17,
**caractérisé en ce qu'**
il est prévu plusieurs rails profilés qui sont positionnés à différentes profondeurs et qui sont aussi montés de préférence à différentes hauteurs.
